# EUROPEAN PATENT SPECIFICATION

(11) **EP 0 432 877 B1**
(45) Date of publication and mention of the grant of the patent: **13.03.1996**
(21) Application number: 90311255.5
(22) Date of filing: 15.10.1990
(51) Int. Cl.: G11B 5/55

(54) **Rotary head actuator for a magnetic disk drive data storage device**
Rotierender Kopfantrieb für Datenspeichergerät eines Magnetscheibenantriebs
Actuateur rotatif de têtes pour un dispositif de stockage de données d'un entraînement à disque magnétique

(30) Priority: 15.12.1989 US 451200
(43) Date of publication of application: 19.06.1991
(60) Divisional application: 95114092.0
(73) Proprietor: SEAGATE TECHNOLOGY INTERNATIONAL, Georgetown, Grand Cayman Island (KY)
(72) Inventor: Goss, Lloyd C., Bloomington, Minnesota 55428 (US)
(74) Representative: Sturt, Clifford Mark

(56) References cited:
- US-A- 4 712 146
- US-A- 4 775 908
- PATENT ABSTRACTS OF JAPAN vol. 12, no. 154 (P-700)(3001) 12 May 1988

## Description

The present invention relates to magnetic disk drive data storage devices, and more particularly to rotary actuators employed in such devices for selectively positioning magnetic transducing heads relative to rotatable disks.

Magnetic disk drive devices generally employ either linear or rotary actuators to position magnetic reading and recording heads with respect to rotatable magnetic disks. Such heads are typically moved at least generally radially of the disks in order to locate a head proximate a desired track on the disks.

Rotary actuators usually include a shaft mounted rotatably on the deck or other stationary housing portion of the drive, along with an arm or group of stacked arms connected to the shaft for pivoting with the shaft. A magnetic tranducing head is mounted at the end of each arm remote from the shaft, and thus is carried in an arcuate path as the shaft pivots. Usually, multiple head support arms are mounted on the shaft in stacked relation, for rotation in concert with the shaft.

The prevailing means for controllably pivoting the head arm assembly is an electric motor including a voice coil and permanent magnets. Typically, the voice coil is a flat loop extending perpendicular to the shaft pivot axis, connected to the shaft for pivoting with the shaft. The permanent magnets are then integral with the disk drive housing, positioned in spaced apart relation to the voice coil and on opposite sides of the coil. When electrical current is directed through the wire of the voice coil, a magnetic field is generated which inter-acts with the magnetic field of the permanent magnets to provide the force which moves the voice coil and rotates the shaft as well.

This orientation of the voice coil, however, gives rise to a problem in that only the radially outward portion of the voice coil has a desirably long moment arm, i.e. distance from the pivot axis. The radially inward portions of the coil have shorter effective moment arms, and thus provide correspondingly reduced rotational force on the shaft and head arm assembly. Of course, this difficulty can be counter-acted to some extent by increasing the size of the voice coil, yet such a "solution" runs contrary to the continuing trend towards smaller and more compact disk drive components, including rotary actuators. Large voice coils further are a disadvantage in that they add to the inertia of the shaft and head arm assembly, resulting in a head arm assembly which cannot be accelerated and decelerated as rapidly as desired, or conversely require increased power to accelerate and decelerate the assembly.

Another challenge associated with rotary actuators is the desire to employ light weight materials, e.g. aluminium, to the extent possible further to reduce inertia of the head arm assembly, as well as reducing overall weight. At the same time, other necessary structures, e.g. flux carrying bodies constructed of steel, have different thermal expansion coefficients and thus raise the potential for distortion due to the varying thermal coefficients of contiguous structures in the actuator.

US-A-4 775 908 discloses a rotating magnetic actuator in which a fixed coil acts on a ring-shaped flux conducting structure and permanent magnet which are mounted on the rotating parts of the actuator.

It is an object of the present invention to provide a rotary actuator, in which a voice coil is located so as to be more effective than in the prior art described above.

According to the present invention, there is provided a rotary actuator for controllably positioning a magnetic transducing head with respect to a magnetic disk rotatably mounted in a disk drive, the rotary actuator comprising a stationary portion, and a head arm assembly mounted for rotation relative to the stationary portion about a longitudinal axis, the head arm assembly comprising at least one transducer support arm extending radially of the longitudinal axis, said at least one transducer support arm carrying at least one magnetic transducing head at a location remote from the longitudinal axis, the stationary portion including a permanent magnet and the head arm assembly including an electrically conductive voice coil arranged so as to cooperate for rotating the head arm assembly relative to the stationary portion for positioning with respect to the disk said at least one magnetic transducing head in use, characterised in that the permanent magnet has a magnet face extending parallel to and in an arc about the longitudinal axis, and the electrically conductive voice coil defines a longitudinally extending surface, which is curved to conform with the magnet face, the electrically conductive voice coil having a thickness in the radial direction which is substantially less than its dimensions in the longitudinal and circumferential directions.

Thus, in the present invention, the voice coil is located at a substantially constant radial separation from the longitudinal axis and so may provide a more effective rotational force in use than is the case in the prior art.

Further, since the thickness of the coil is substantially less than its other dimensions, rapid dissipation of heat from the voice coil can be obtained.

The voice coil may also be given a reduced mass for reduced inertia of the head arm assembly at no reduction in available power to accelerate and decelerate the head arm assembly.

The present invention is applicable to a disk drive having a stationary frame, a data storage disk mounted rotatably relative to the frame, a magnetic transducing head for storing data onto the disk and for retrieving data previously stored onto the disk, and a rotary actuator according to the invention for controllably positioning the transducing head relative to the disk.

In the preferred embodiment described below, the rotary actuator includes a longitudinally extending shaft, and means for rotatably supporting the shaft with respect to the stationary frame. A plurality of transducer support arms are integrally mounted on the shaft for rotation with the shaft, and extend away from the shaft in a first radial direction. At least one magnetic transducing head is mounted on each support arm at an end portion thereof remote from the shaft for travel in an arcuate path as the shaft rotates. A permanent magnet is fixedly mounted on the stationary frame and spaced apart from the shaft. The magnet has a concave magnet face directed towards the shaft and curved about the longitudinal axis. A coil support is integrally mounted on the shaft and extends away from the shaft in a second radial direction. An electrically conductive voice coil is mounted on the coil support for arcuate travel about the longitudinal axis as the shaft rotates. The coil has a substantially uniform thickness in the radial direction, and is curved about the longitudinal axis to conform to the curvature of the magnet face. The coil is disposed radially inwardly of the magnet face, and has a longitudinal dimension and a width, each of which is at least five times its thickness.

Preferably, the coil is formed from a single aluminium wire, with the thickness of the coil being determined by the diameter of the wire. The coil may have a generally rectangular form, including a pair of opposed longitudinal side portions and a pair of opposed arcuate end portions, combining to form a thin rectangular frame.

Because the radial dimension of the coil is determined by its relatively small thickness, substantially all of the coil has the same moment or lever arm, i.e. is at the same distance from the pivot axis. This arrangement enhances the performance of the rotary actuator in achieving more consistent and reliable performance, and also in providing the desired level of force to rotate the head arm assembly with a coil substantially smaller in size as compared with a conventional coil whose major dimension is in the radial direction. The smaller coil reduces the inertia of the assembly for more rapid acceleration and deceleration, leading to reduced time for gaining access to particular data tracks on disks, lower power requirements, or both. This arrangement further requires only about half the permanent magnet volume required in connection with a perpendicular or radially disposed coil.

In accordance with a further aspect of the invention, the means for supporting the actuator shaft include first and second transverse bearing plates spaced apart from one another, and first and second bearings supported in the first and second bearing plates, respectively, for receiving opposite ends of the shaft. One of the bearing plates may incorporate a parallelogram flexure providing means for axially pre-loading the pair of bearings. This axial pre-load secures the shaft position. The bearing plates may be secured to substantially rigid spacing means for maintaining their spaced relationship. Biasing means, mounted on the spacing means, may then contact the flexible bearing plate and provide a bias to move that plate longitudinally away from the other.

Preferably, such biasing means comprise a pair of leaf springs in contact with the flexible bearing plate. The leaf springs provide a biasing force in a direction axially pre-loading the bearings away from each other. This compensates for thermal expansion effects if aluminium is used in the bearing plates contiguous with pole pieces of a low carbon steel for transfer of magnetic flux. This thermal compensation structure enables the use of fixed races in the bearings for more reliable mounting of the pivot shaft.

To provide the parallelogram flexure, a portion of the bearing plate contacting the leaf springs is cut away to form parallel flexure means or load beams. Performance is enhanced further by the insertion of damping material between the flexure load beams.

Thus, in accordance with the present invention, a thin voice coil, with its major dimensions perpendicular to the radial direction, can be provided in a substantially reduced size and yet still give the same level of force to accelerate and decelerate the head arm assembly. This thin (rather than bobbin) structure promotes rapid heat dissipation from the coil. The reduced size coil lowers the inertia of the head arm assembly, thus further reducing power requirements.

The invention is described further, by way of example, with reference to the accompanying drawings, in which:-
Figure 1 is a top plan view of a magnetic disk drive including a rotary actuator constructed in accordance with the present invention;
Figure 2 is a perspective view of the actuator assembly;
Figure 3 is a perspective view of the actuator assembly with a pivot shaft and head arm assembly removed;
Figure 4 is a perspective view of the pivot shaft and head arm assembly;
Figure 5 is a perspective view of a voice coil of a head arm assembly; and
Figure 6 is a top plan view of portions of the actuator assembly.

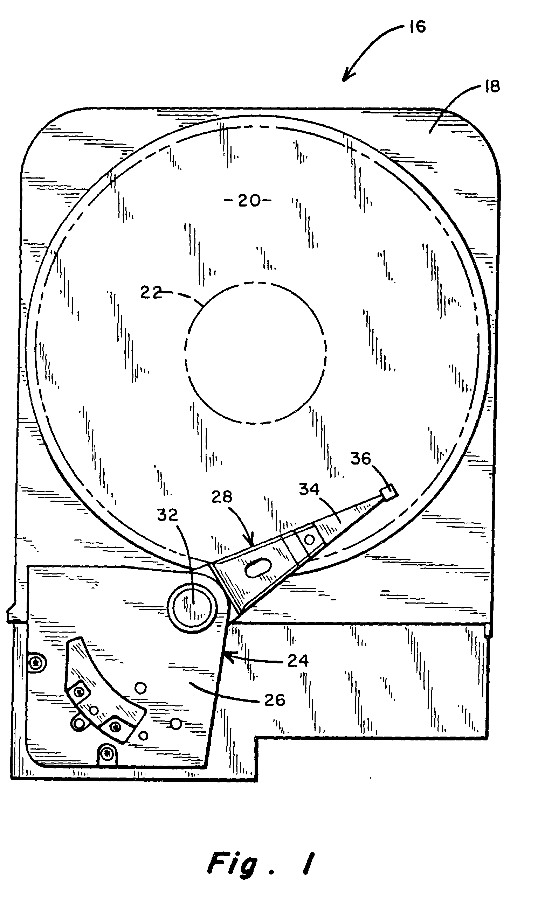

In Figure 1, there is shown a magnetic disk drive 16 including a deck 18 which is part of a stationary framework or housing for the disk drive. A stack of magnetic data storage disks, the top one being shown at 20, is rotatably mounted relative to the deck through a spindle 22. Also mounted on the deck 18 is a rotary actuator assembly 24, including a portion 26 which is fixed to the deck and a head arm assembly 28 which is movable relative to the deck. More particularly, the head arm assembly 28 can be pivoted with respect to the deck about a longitudinal axis 30 of a longitudinal (i.e. vertical) actuator shaft 32. The head arm assembly includes a stack of multiple transducer support arms, the top one being shown at 34. A magnetic transducing head 36 is supported at the free end of the arm 34, remote from the actuator shaft, whereby the transducing head 36 traverses an arcuate path as the shaft 32 pivots.

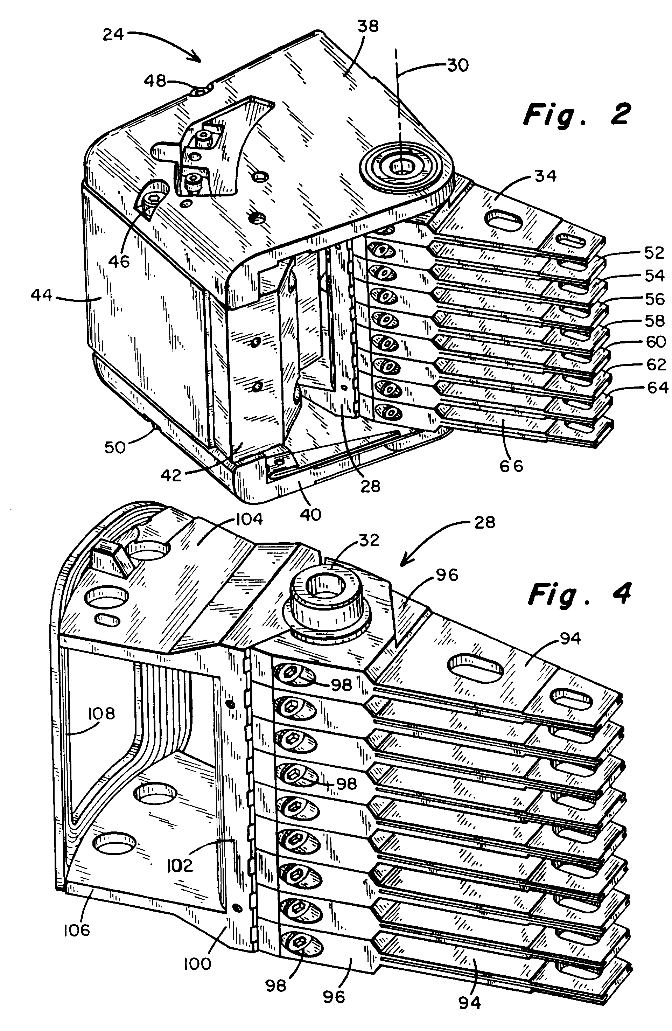

Figure 2 shows the actuator assembly 24 removed from the disk drive. The fixed or stationary portion of the actuator assembly includes a pair of generally transverse or horizontal bearing plates constructed of aluminium, in particular an upper bearing plate 38, and a lower bearing plate 40 secured to the deck 18. An aluminium pole piece support bracket 42 is secured to the bearing plates 38 and 40. The bearing plates are also secured to a pole piece 44, e.g. by fasteners 46, 48 and 50. The pole piece is preferably constructed of a low carbon steel, and acts as a spacer to maintain the separation between the bearing plates.

The head arm assembly 28 includes a plurality of the transducer support arms 52 to 66 along with the top arm 34, all integral with the actuator shaft 32 and thus rotatable in concert as the shaft pivots.

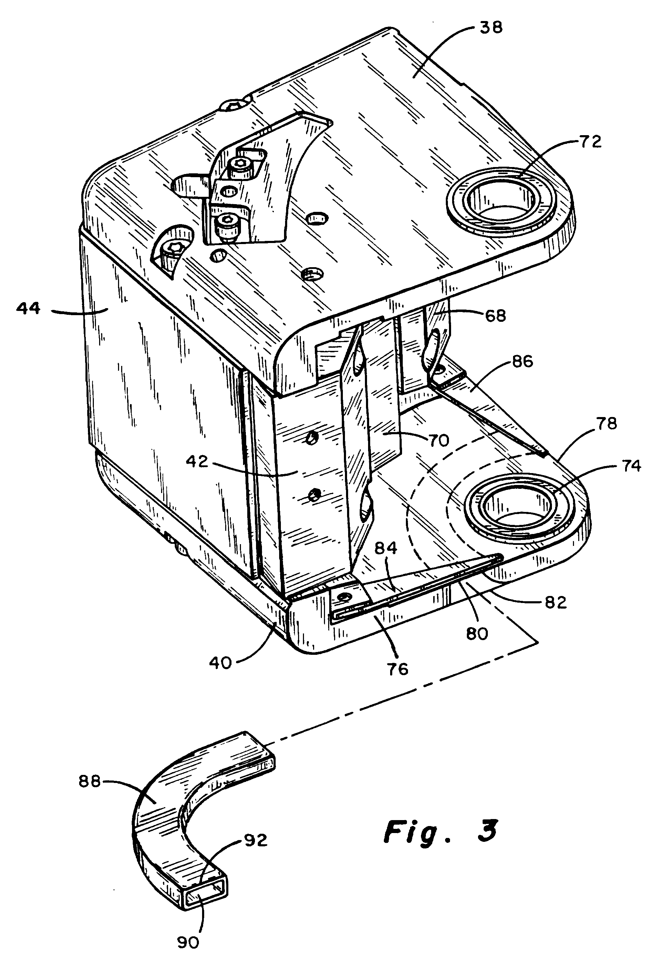

In Figure 3, the head arm assembly is removed from the remainder of the actuator assembly 24, to reveal a pole piece support bracket 68 which cooperates with the bracket 42 in determining the location of a pole piece 70 situated between the brackets.

Upper and lower bearings 72 and 74 are supported by the bearing plates 38 and 40, respectively, and support opposite ends of the actuator pivot shaft 32 to enable shaft rotation. The vertical or longitudinal separation of the bearings 72 and 74 is pre-determined with respect to the actuator shaft length such that the bearing plate of one of the bearings is at least slightly elastically deformed when the shaft 32 is supported between the plates. Biasing springs 84 and 86 provide the main axial bearing pre-load. Thus, the bearings provide a restoring force which secures the actuator shaft position.

Races of the bearings 72 and 74 are fixed. This, in combination with the simultaneous use of aluminium and low carbon steel as noted above, creates a need for thermal compensation, in particular due to the different thermal expansion coefficients for aluminium and low carbon steel. To this end, an arcuate cut out is formed in the bearing plate 40 from a side edge 76 to another side edge 78 as indicated by broken lines, forming upper and lower parallel flexure members or load beams 80 and 82. A leaf spring 84 is secured to the bracket 42 and is pre-loaded to provide a downward bias to the bearing plate 40 along the edge 76. Likewise, a leaf spring 86, mounted on the bracket 68, downwardly biases the bearing plate along the edge 78. In combination, the leaf springs 84 and 86 together with the load beams 80 and 82 compensate for the thermal mismatch, and impart excellent thermal performance characteristics to the rotary actuator.

To overcome undesirable resonance effects, an arcuate damping member 88 having an aluminium core 90 surrounded by a visco-elastic damping layer 92 is inserted into the arcuate opening between the load beams 80 and 82.

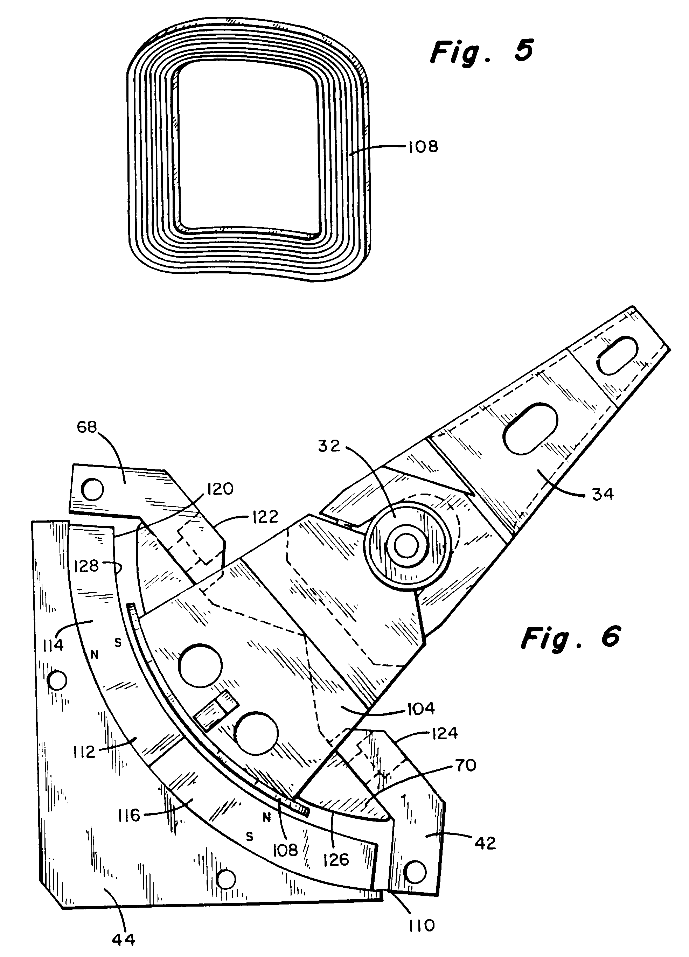

The head arm assembly is illustrated in Figure 4. The transducer support arms 34 and 52 to 66 are substantially identical. The arm 34, for example, includes a relatively thin tapered portion 94 extending radially of a relatively thick base 96. A fastener 98, and a similar fastener on the other side and thus not visible in the Figure, secure the base 96 to a voice coil carrying frame 100. The arms 52 to 66 similarly include tapered extensions and bases, likewise secured to the coil carrying frame. With the actuator pivot shaft 32 positioned between the bases and an upright support portion 102 of the frame, fasteners 98 secure the arms and the frame integrally to the actuator pivot shaft. Upper and lower flanges 104 and 106 of the frame 100 extend radially away from the shaft 32, in a direction opposite to that of the arm extension, thus to counterbalance the transducer support arms. A voice coil 108 is secured at its upper and lower end portions to the flanges 104 and 106, and thus traverses an arcuate path when the shaft 32 pivots. Preferably, the entire assembly including the shaft 32, the arms, the frame 100 and the voice coil 108, is constructed of aluminium. This reduces the differential thermal expansion of this assembly, enabling more accurate location of the recording heads with respect to the magnetic tracks located on the disk.

As seen in Figure 5, the voice coil 108 forms a thin, rectangular frame. The voice coil is generally flat, but more precisely is curved about the longitudinal axis 30. The rectangular frame is formed of multiple windings (preferably over one hundred) of an aluminium wire of rectangular cross section. The windings themselves form the rectangular frame, there being no core about which the wire is wound, for example as in the well known bobbin approach.

The longitudinal dimension and the width (or arcuate) dimension of the voice coil 108 are preferably an order of magnitude greater than the coil thickness, and in any event are at least five times the thickness. As a result, the voice coil 108 can be considered as contained within a thin wall of a circular upright cylinder, concentric with the axis 30, with the moment or lever arm of the coil being equal to the cylinder radius. Accordingly, virtually the entire voice coil has the same moment or lever arm. With the wire winding alone forming the coil (no core), the voice coil 108 can be as thin as the wire dimensions, and have longitudinal and arcuate dimensions determined by the number of turns.

As seen in Figure 6, the pole piece 44 includes a radially inner surface 110 curved about the axis 30. A permanent magnet assembly 112, including magnets 114 and 116, is secured to the pole piece 44. Magnets 114 and 116 are arcuate, and curved about the pivot axis and thus conform to the surface 110 of the pole piece 44. This facilitates mounting of the magnets 114 and 116 to the pole piece, with radially outer faces of the magnets contiguous with the surface 110. A radially inner surface 120 of the magnet assembly likewise is curved about the pivot axis.

The pole piece 70, serving as a radially inner pole piece, is fixed with respect to the deck 18, situated between and spaced apart from the flanges 104 and 106 to permit movement of the head arm assembly. More particularly, fasteners as indicated at 122 and 124 secure the pole piece 70 to brackets 42 and 68. A radially outer surface 126 of the pole piece 70 is curved about the longitudinal axis, and thus cooperates with the surface 120 of the magnet assembly 112 to form an arcuate, longitudinal air gap 128 between the magnet and the radially inner pole piece. The coil 108 is situated within the air gap 128, preferably being radially centered.

The rotary actuator 24 functions in a well known manner. When electric current is supplied to the voice coil 108, a magnetic field is generated about the voice coil that inter-acts with the magnetic field about the permanent magnet assembly 112. The force of the interacting magnetic fields moves the voice coil 108 relative to the permanent magnet assembly, thus to pivot the shaft 32 and the head arm assembly, which in turn moves thee magnetic transducing head 36 and the remaining heads in arcuate paths. Thus, each of the transducing heads is movable generally radially of an associated one of the magnetic disks, which, in combination with disk rotation, enables the selected head positioning necessary for recording and retrieving data.

As compared with a conventional horizontal voice coil orientation, the vertical flat coil substantially reduces the time required for acceleration and deceleration of the head arm assembly through reduced actuator inertia, requires less power, and substantially reduces voice coil temperature due to markedly improved heat dissipation. This approach has been found to reduce the required permanent magnet volume by nearly fifty percent. Further reduction in inertia results from the use of aluminium throughout the head assembly and for much of the remainder of the actuator assembly. Fixed race ball bearings can be employed to secure the pivot shaft, in spite of the different materials involved, due to the leaf springs and parallel load beams, which compensate for differences in thermal expansion co-efficients.

## Claims

1. A rotary actuator for controllably positioning a magnetic transducing head with respect to a magnetic disk rotatably mounted in a disk drive, the rotary actuator comprising a stationary portion (26), and a head arm assembly (28) mounted for rotation relative to the stationary portion about a longitudinal axis (30), the head arm assembly comprising at least one transducer support arm (34, 52 to 66) extending radially of the longitudinal axis, said at least one transducer support arm carrying at least one magnetic transducing head (36) at a location remote from the longitudinal axis, the stationary portion including a permanent magnet (114, 116) and the head arm assembly including an electrically conductive voice coil (108) arranged so as to cooperate for rotating the head arm assembly relative to the stationary portion for positioning with respect to the disk said at least one magnetic transducing head in use, characterised in that the permanent magnet has a magnet face (120) extending parallel to and in an arc about the longitudinal axis, and the electrically conductive voice coil defines a longitudinally extending surface, which is curved to conform with the magnet face, the electrically conductive voice coil having a thickness in the radial direction which is substantially less than its dimensions in the longitudinal and circumferential directions.

2. A rotary actuator according to claim 1 characterised in that the dimensions of the electrically conductive voice coil (108) in the longitudinal and circumferential directions are each at least five times its thickness.

3. A rotary actuator according to claim 1 or 2 characterised in that the dimensions of the electrically conductive voice coil (108) in the longitudinal and circumferential directions are each at least an order of magnitude greater than its thickness.

4. A rotary actuator according to any of claims 1 to 3 characterised in that the electrically conductive voice coil (108) has a generally rectangular form.

5. A rotary actuator according to any of claims 1 to 4 characterised in that the electrically conductive voice coil (108) is formed from a single wire having a rectangular cross section, and in that the thickness of the electrically conductive voice coil is determined by the cross section of the wire and its dimensions in the longitudinal and circumferential directions are determined by the number of turns of the wire.

6. A rotary actuator according to any preceding claim characterised in that the stationary portion (26) further includes first and second magnetic flux conducting bodies (44, 70), one (44) of which carries the permanent magnet (114, 116) and the other (70) of which defines with the permanent magnet an arcuate air gap (128) receiving the electrically conductive voice coil (108).

7. A rotary actuator according to any preceding claim characterised in that the head arm assembly comprises a pivot shaft (32) and in that the stationary portion (26) comprises means (38, 40, 72, 74) for rotatably supporting the pivot shaft, the supporting means including first and second longitudinally spaced bearing plates (38, 40) and first and second bearings (72, 74) supported by the first and second bearing plates, respectively, one of the bearing plates being elastically deformed in a direction away from the other of the bearing plates to provide a restoring force for locating the pivot shaft.

8. A rotary actuator according to claim 7 characterised in that the head arm assembly further comprises biasing means (84, 86) for biasing at least one of the bearing plates in a direction away from the other of the bearing plates.

9. A rotary actuator according to claim 7 or 8 characterised in that one of the bearing plates comprises first and second parallel flexure members (80, 82) defining an arcuate opening about the bearing axis and through said bearing plate, and an arcuate damping member (88) within said arcuate opening.

10. A disk drive comprising a rotary actuator having a stationary frame (26), a magnetic disk (20) mounted with respect to the frame for rotation relative to the frame, and a magnetic transducing head (36) for storing data onto the disk and for retrieving data previously stored on the disk, for controllably positioning the head (36) with respect to the disk, said rotary actuator having a longitudinally extended actuator shaft (32), and means (38, 40) for supporting the shaft with respect to the frame to pivot relative to the frame about a longitudinal pivot axis (30), a transducer support arm means (34, 52 to 66) integrally mounted to the shaft for rotation therewith, said transducer support arm means extending away from the shaft in a first radial direction, and at least one magnetic transducing head (36) mounted to the support arm means at an end portion thereof remote from the shaft, for travel in an arcuate path as the shaft rotates, a permanent magnet means (112, 114) mounted the frame in spaced apart relation to the shaft, characterised in that said magnet means have a concave magnet face directed towards the shaft and curved about the pivot axis, a coil support means (100) integrally mounted to the shaft and extended away from the shaft in a second radial direction, and an electrically conductive voice coil (108) mounted to the coil support means for arcuate travel about the pivot axis as the actuator shaft pivots, said voice coil having a uniform thickness radially and being disposed radially inwardly of the magnet face, said coil being curved about the pivot axis to conform to the curvature of the magnet face, and having a longitudinal dimension and a width dimension, each at least five times the thickness.

## Patentansprüche

1. Drehstellglied zur steuerbaren Positionierung eines magnetischen Wandlerkopfes bezüglich einer Magnetplatte, die drehbar in einem Plattenlaufwerk befestigt ist, wobei das Drehstellglied einen stationären Teil (26) und eine Kopf-Armbaugruppe (28) umfaßt, die um eine längsverlaufende Achse (30) gegenüber dem stationären Teil drehbar befestigt ist, wobei die Kopf-Armbaugruppe zumindestens einen Wandler-Haltearm (34,52-66) umfaßt, der sich in Radialrichtung der Längsachse erstreckt, wobei der zumindestens eine Wandler-Haltearm zumindest einen magnetischen Wandlerkopf (36) an einer von der Längsachse entfernten Stelle trägt, wobei der stationäre Teil einen Permanentmagneten (114,116) einschließt, während die Kopf-Armbaugruppe eine elektrisch leitende Schwingspule (108) einschließt, wobei diese Teile zur Drehung der Kopf-Armbaugruppe gegenüber dem stationären Teil zusammenwirken, um im Betrieb den zumindest einen magnetischen Wandlerkopf gegenüber der Magnetplatte zu positionieren,
dadurch gekennzeichnet, daß der Permanentmagnet eine Magnetstirnfläche (120) aufweist, die sich parallel zu und auf einem Bogen um die Längsachse erstreckt, daß die elektrisch leitende Schwingspule eine sich in Längsrichtung erstreckende Oberfläche bildet, die in Übereinstimmung mit der Form der Magnetstirnfläche gekrümmt ist, und daß die elektrisch leitende Schwingspule eine Dicke in der Radialrichtung aufweist, die beträchtlich kleiner als ihre Abmessungen in den Längs- und Umfangsrichtungen ist.

2. Drehstellglied nach Anspruch 1,
dadurch gekennzeichnet, daß die Abmessungen der elektrisch leitenden Schwingspule (108) in Längsrichtung und in Umfangsrichtung zumindest dem Fünffachen ihrer Dicke entsprechen.

3. Drehstellglied nach Anspruch 1 oder 2,
dadurch gekennzeichnet, daß die Abmessungen der elektrisch leitenden Schwingspule (108) in der Längsrichtung und der Umfangsrichtung jeweils zumindest um eine Größenordnung größer als ihre Dicke sind.

4. Drehstellglied nach einem der Ansprüche 1 bis 3,
dadurch gekennzeichnet, daß die elektrisch leitende Schwingspule (108) eine allgemein rechtwinklige Form aufweist.

5. Drehstellglied nach einem der Ansprüche 1 bis 4,
dadurch gekennzeichnet, daß die elektrisch leitende Schwingspule (108) aus einem einzigen Draht mit einem rechtwinkligen Querschnitt gebildet ist, und daß die Dicke der elektrisch leitenden Schwingspule durch den Querschnitt des Drahtes bestimmt ist, wärhend ihre Abmessungen in der Längsrichtung und in der Umfangsrichtung durch die Anzahl der Windungen des Drahtes bestimmt sind.

6. Drehstellglied nach einem der vorhergehenden Ansprüche,
dadurch gekennzeichnet, daß der stationäre Abschnitt (26) weiterhin erste und zweite einen Magnetfluß leitende Körper (44,70) einschließt, von denen einer (44) den Permanentmagneten (114,116) trägt, während der andere (70) der Körper zusammen mit dem Permanentmagneten einen bogenförmigen Luftspalt (128) zur Aufnahme der elektrisch leitenden Schwingspule (108) umgrenzt.

7. Drehstellglied nach einem der vorhergehenden Ansprüche,
dadurch gekennzeichnet, daß die Kopf-Armbaugruppe eine Schwenkwelle (32) umfaßt, und daß der stationäre Teil (26) Einrichtungen (38,40,72,74) zur drehbaren Lagerung der Schwenkwelle umfaßt, wobei die Halterungseinrichtungen erste und zweite mit Abstand voneinander in Längsrichtung angeordnete Lagerplatten (38,40) und erste und zweite Lager (72,74) einschließen, die an der ersten bzw. zweiten Lagerplatte gehaltert sind, wobei eine der Lagerplatten elastisch in einer Richtung von der anderen der Lagerplatten fort verformt ist, um eine Rückstellkraft zum Festlegen der Lage der Schwenkwelle zu liefern.

8. Drehstellglied nach Anspruch 7,
dadurch gekennzeichnet, daß die Kopf-Armbaugruppe weiterhin Vorspanneinrichtungen (84,86) zur Vorspannung zumindest einer der Lagerplatten in einer Richtung von der anderen der Lagerplatten fort umfaßt.

9. Drehstellglied nach Anspruch 7 oder 8,
dadurch gekennzeichnet, daß eine der Lagerplatten erste und zweite parallele Biegungselemente (80,82) umfaßt, die eine bogenförmige Öffnung um die Lagerachse herum und durch die Lagerplatte hindurch umgrenzen, und daß ein bogenförmiges Dämpfungselement (88) in der bogenförmigen Öffnung angeordnet ist.

10. Plattenlaufwerk mit einem Drehstellglied mit einem stationären Rahmen (26), mit einer Magnetplatte (20), die bezüglich des Rahmens für eine Drehung gegenüber dem Rahmen befestigt ist, und mit einem magnetischen Wandlerkopf (36) zum Speichern von Daten auf der Magnetplatte und zum Zurücklesen von vorher auf der Magnetplatte gespeicherten Daten, wobei das Drehstellglied den Kopf (36) bezüglich der Platte in steuerbarer Weise positioniert und das Drehstellglied eine sich in Längsrichtung erstreckende Stellglied-Welle (32) und Einrichtungen (38,40) zur Lagerung der Welle bezüglich des Rahmens für eine Schwenkbewegung gegenüber diesem Rahmen um eine längsverlaufende Schwenkachse (30) aufweist, wobei Wandler-Haltearmteile (34,53-66) einstückig an der Welle für eine Drehung mit dieser befestigt sind und die Wandler-Haltearmteile sich von der Welle in einer ersten Radialrichtung fort erstrecken, und wobei zumindestens ein magnetischer Wandlerkopf (36) an den Haltearmteilen an einem von der Welle entfernten Endabschnitt dieser Haltearmteile befestigt ist, um sich auf einer bogenförmigen Bahn zu bewegen, wenn sich die Welle dreht, wobei ein Permanentmagnetteil (112,114) an dem Rahmen mit Abstand von der Welle befestigt ist,
dadurch gekennzeichnet, daß die Magnetteile eine konkave Magnetstirnfläche aufweisen, die auf die Welle gerichtet und um die Schwenkachse gekrümmt ist, daß eine Spulenhalterungseinrichtung (100) einstückig an der Welle befestigt ist und sich in einer zweiten radialen Richtung von der Welle fort erstreckt, daß eine elektrisch leitende Schwingspule (108) an der Spulenhalterungseinrichtung für eine bogenförmige Bewegung um die Schwenkachse bei einer Drehung der Stellglied-Welle befestigt ist, daß die Schwingspule in Radialrichtung eine gleichförmige Dicke aufweist und radial innenliegend zur Magnetstirnfläche angeordnet ist, daß die Schwingspule um die Schwenkachse gekrümmt ist, um hinsichtlich ihrer Form mit der Krümmung der Magnetstirnfläche übereinzustimmen, und daß die Schwingspule eine Längsabmessung und eine Breitenabmessung aufweist, die jeweils zumindest dem Fünffachen der Dicke entsprechen.

## Revendications

1. Actionneur rotatif destiné à positionner de manière contrôlable une tête de transduction magnétique par rapport à un disque magnétique monté de manière rotative sur un entraînement à disque, l'actionneur rotatif comprenant une partie fixe (26), et un ensemble (28) bras-têtes monté pivotant par rapport à la partie fixe autour d'un axe longitudinal (30), l'ensemble bras-têtes comprenant au moins un bras support de transducteur (34, 52 à 66) s'étendant radialement de l'axe longitudinal, ledit au moins un bras support de transducteur portant au moins une tête de transduction magnétique (36) à un emplacement éloigné de l'axe longitudinal, la partie fixe comprenant un aimant permanent (114, 116) et l'ensemble bras-têtes comprenant une bobine téléphonique (108) électriquement conductrice agencée afin de coopérer pour faire tourner l'ensemble bras-têtes par rapport à la partie fixe pour positionner, par rapport au disque, ladite au moins une tête de transduction magnétique en service, caractérisé en ce que l'aimant permanent a une face d'aimant (120) s'étendant parallèlement et en arc autour de l'axe longitudinal, et la bobine téléphonique électriquement conductrice définit une surface s'étendant longitudinalement, qui est incurvée pour se conformer à la face d'aimant, la bobine téléphonique électriquement conductrice ayant une épaisseur dans la direction radiale qui est substantiellement inférieure à ses dimensions dans les directions longitudinale et circonférentielle.

2. Actionneur rotatif selon la revendication 1, caractérisé en ce que les dimensions de la bobine téléphonique électriquement conductrice (108) dans les directions longitudinale et circonférentielle font chacune au moins cinq fois son épaisseur.

3. Actionneur rotatif selon la revendication 1 ou 2, caractérisé en ce que les dimensions de la bobine téléphonique électriquement conductrice (108) dans les directions longitudinale et circonférentielle sont chacune caractérisé en ce que les dimensions de la bobine téléphonique électriquement conductrice (108) dans les directions longitudinale et circonférentielle sont chacune au moins d'un ordre de grandeur supérieur à son épaisseur.

4. Actionneur rotatif selon l'une quelconque des revendications 1 à 3, caractérisé en ce que la bobine téléphonique (108) électriquement conductrice a une forme globalement rectangulaire.

5. Actionneur rotatif selon l'une quelconque des revendications 1 à 4, caractérisé en ce que la bobine téléphonique (108) électriquement conductrice est formée à partir d'un fil unique ayant une coupe transversale rectangulaire, et en ce que l'épaisseur de la bobine téléphonique électriquement conductrice est déterminée par la coupe transversale du ses dimensions dans les directions longitudinale et circonférentielle sont déterminées par le nombre de spires du fil.

6. Actionneur rotatif selon l'une quelconque des revendications précédentes, caractérisé en ce que la partie fixe (26) comprend en outre des premier et second corps (44, 70) conduisant le flux magnétique, dont l'un (44) supporte l'aimant permanent (114, 116) et l'autre (70) définit avec l'aimant permanent un entrefer arqué (128) recevant la bobine téléphonique (108) électriquement conductrice.

7. Actionneur rotatif selon l'une quelconque des revendications précédentes, caractérisé en ce que l'ensemble bras-têtes comprend un arbre à pivot (32) et en ce que la partie fixe (26) comprend des moyens (38, 40, 72, 74) pour supporter de manière rotative l'arbre à pivot, les moyens de support comprenant des premier et second disques d'appui (38, 40) espacés longitudinalement et des premier et second paliers (72, 74) supportés par les premier et second disques d'appui, respectivement, un des disques d'appui étant élastiquement déformé dans une direction s'éloignant de l'autre disque d'appui pour fournir une force de rappel pour placer l'arbre à pivot.

8. Actionneur rotatif selon la revendication 7, caractérisé en ce que l'ensemble bras-têtes comprend en outre des moyens de poussée (84, 86) pour pousser au moins un des disques d'appui dans une direction s'éloignant de l'autre disque d'appui.

9. Actionneur rotatif selon la revendication 7 ou 8, caractérisé en ce qu'un des disques d'appui comprend des premier et second éléments de flexion (80, 82) parallèles définissant une ouverture arquée autour de l'axe des paliers et à travers ledit disque d'appui, et un élément amortisseur (88) arqué à l'intérieur de ladite ouverture arquée.

10. entraînement à disque comprenant un actionneur rotatif ayant un châssis fixe (26), un disque magnétique (20) monté par rapport au châssis pour tourner par rapport au châssis, et une tête de transduction magnétique (36) pour stocker des données sur le disque et pour récupérer des données précédemment stockées sur le disque, pour positionner de manière contrôlable la tête (36) par rapport au disque, ledit actionneur rotatif ayant un arbre d'actionneur (32) s'étendant longitudinalement, et des moyens (38, 40) pour supporter l'arbre par rapport au châssis pour pivoter par rapport au châssis autour d'un axe de pivot longitudinal (30), des moyens (34, 52 à 66) formant bras supports de transducteur montés intégralement sur l'arbre pour tourner avec celui-ci, lesdits moyens formant bras supports de transducteur s'étendant à partir de l'arbre dans une première direction radiale, et au moins une tête de transduction magnétique (36) montée sur les moyens formant bras supports à une de ses parties d'extrémité éloignée de l'arbre, pour suivre une trajectoire arquée au fur et à mesure que l'arbre tourne, des moyens formant aimant permanent (112, 114) montés sur le châssis en relation espacée avec l'arbre, caractérisé en ce que lesdits moyens formant aimant ont une face d'aimant concave dirigée vers l'arbre et incurvée autour de l'axe de pivot, des moyens (100) formant support de bobine montés solidairement fixés à l'arbre et s'étendant à partir de l'arbre dans une seconde direction radiale, et une bobine téléphonique (108) électriquement conductrice montée sur les moyens formant support de bobine pour se déplacer autour de l'axe de pivot lorsque l'arbre d'actionneur pivote, ladite bobine téléphonique ayant une épaisseur uniforme radialement et étant disposée radialement vers l'intérieur de la face d'aimant, ladite bobine étant incurvée autour de l'axe de pivot pour se conformer à la courbure de la face d'aimant, et ayant une dimension longitudinale et une dimension en largeur, chacune faisant au moins cinq fois son épaisseur.
